# EUROPEAN PATENT SPECIFICATION

(11) **EP 1 569 298 B1**
(45) Date of publication and mention of the grant of the patent: **29.04.2009**
(21) Application number: 04004115.4
(22) Date of filing: 24.02.2004
(51) Int. Cl.: H01Q 9/04, H01Q 1/24

(54) **Television antenna for a portable communication device**
Fernsehantenne für tragbares Kommunikationsgerät
Antenne de télévision pour un dispositif communicant portatif

(43) Date of publication of application: 31.08.2005
(73) Proprietor: Sony Ericsson Mobile Communications AB, 221 88 Lund (SE)
(72) Inventor: Ying, Zhinong, 226 49 Lund (SE)
(74) Representative: Dahnér, Christer

(56) References cited:
- EP-A- 0 604 338
- EP-A- 1 189 304
- US-A1- 2001 029 588
- US-A1- 2002 024 466
- PATENT ABSTRACTS OF JAPAN vol. 1998, no. 03, 27 February 1998 (1998-02-27) -& JP 09 307344 A (MATSUSHITA ELECTRIC IND CO LTD), 28 November 1997 (1997-11-28)
- KALIALAKIS C ET AL: "HARMONIC RADIATION FROM VARACTOR-LOADED MICROSTRIP ANTENNAS" 31ST EUROPEAN MICROWAVE CONFERENCE PROCEEDINGS. LONDON, SEPT. 25 - 27, 2001, PROCEEDINGS OF THE EUROPEAN MICROWAVE CONFERENCE, LONDON: CMP, GB, vol. 2 OF 3 CONF. 31, 25 September 2001 (2001-09-25), pages 133-136, XP001044861 ISBN: 0-86213-148-0
- PANAYI P K ET AL: "Tuning techniques for planar inverted-F antenna" ELECTRONICS LETTERS, IEE STEVENAGE, GB, vol. 37, no. 16, 2 August 2001 (2001-08-02), pages 1003-1004, XP006017029 ISSN: 0013-5194

## Description

### TECHNICAL FIELD OF THE INVENTION

The present invention relates to the field of antennas and more particularly to an inverted F television antenna unit for a portable communication device and a portable communication device comprising such a television antenna unit.

### DESCRIPTION OF RELATED ART

There is a trend within the field of portable communication devices to make these devices as small as possible. There is furthermore a trend to enable as much functionality in a portable communication device as possible. Nowadays the phones also have fairly large colour screens. This has led to television being interesting to incorporate into mobile phones.

The problem with television signals is that they normally require a relatively large sized antenna in order to cover the whole frequency band used. This has been a major obstacle in providing television in relation to mobile phones, where the size is critical.

In Japanese phones there has been provided a television antenna in the form of the microphone cable, perhaps in relation to a hands-free set. It would however be beneficial if the antenna could be made smaller than this.

In WO-00/03453, there is described a printed metal strip antenna, which includes a ground post and an antenna feed pin. A matching bridge is here provided between the ground post and antenna feed pin, which allows the matching of the antenna by adjusting the length of the matching bridge. This antenna is however provided for telephone functions and transmission bands.

EP-604338 describes an inverted F antenna arrangement having two antenna elements; a main longer one and a second smaller one where each may be open-ended or connected to ground either directly or via a capacitor, which capacitor may be adjustable. When provided with capacitors, these may be used for switching the antenna between different frequency bands.

Kalialakis C. et al.: "Harmonic Radiation from Varactor-Loaded Microstrip Antennas", 31st European Microwave Conference Proceedings. London, Sept 25 -27, 2001, Proceedings of the European Microwave Conference, London: CMP, GB, vol. 2 of 3 Conf. 31, 25 September 2001, discusses a patch antenna that is designed to resonate at around 1.78 GHz. The resonance frequency may then be lowered by using a varactor.

Panayi P.K. et al.: "Tuning techniques for planar inverted-F antenna", Electronic Letters, IEE Stevenage, GB, vol. 37, no. 16, 2 August 2001 describes a PIFA antenna where a tuning element, for instance a variable capacitor, is used for changing the resonance frequency in order to switch between frequency bands.

US2001/0029588 discloses a portable information processing apparatus with attachable gas and PHS units.

It would thus be advantageous to provide a television antenna that is small while at the same time allowing good properties over the whole television band, such that it can be used in connection with small portable communication devices like mobile phones.

### SUMMARY OF THE INVENTION

The present invention is directed towards solving the problem of providing a television antenna that is small while at the same time allowing good properties over the whole television transmission band, such that it can be used in connection with small portable communication devices like mobile phones.

One object of the present invention is thus to provide a television antenna unit that is small while at the same allows good properties over the whole television transmission band, such that it can be used in connection with small portable communication devices like mobile phones.

The object is achieved by an embodiment according to claim 1.

According to a first aspect of the present invention, this object is achieved by an Inverted F television antenna unit for a portable communication device comprising an antenna element having a long main body and provided with a ground connection in the form of a first leg and a feeding connection in the form of a second leg at a first end of said long main body. The antenna unit further comprises a tuning element connected between the antenna element and ground at a second opposite end of the long main body and providing an adjustable capacitance, wherein the tuning element is provided for tuning the antenna element to different frequencies of a television frequency band of 470 - 860 MHz and the feeding connection is distanced from the tuning element with a distance at least approximately corresponding to a quarter of a wavelength of the highest frequency of this television frequency band. The Inverted F television antenna unit is a removable plug-in module comprising at least three electrical interfaces, being the ground connection of the antenna element and the tuning element, the feeding connection to a television receiving circuit, and the connection connecting the tuning element; for connection to the communication device.

A second aspect of the present invention is directed towards a television antenna unit including the features of the first aspect, wherein said antenna element has a long main body, where said ground and feeding connections are provided at a first end of said long main body and the tuning element is connected at a second opposite end of said main body.

A third aspect of the present invention is directed towards a television antenna unit including the features of the first aspect, wherein the feeding connection is distanced from the tuning element with a distance at least approximately corresponding to a quarter of a wavelength of the highest frequency of the television frequency band.

A fourth aspect of the present invention is directed towards a television antenna unit including the features of the third aspect, wherein said frequency is the highest frequency of the television frequency band.

A fifth aspect of the present invention is directed towards a television antenna unit including the features of the second aspect, wherein the length of the long main body is in the interval 40 - 50 mm.

A sixth aspect of the present invention is directed towards a television antenna unit including the features of the first aspect, wherein the antenna unit has a height in the interval of 20 - 30 mm.

A seventh aspect of the present invention is directed towards a television antenna unit including the features of the first aspect, wherein said tuning element is a capacitive element.

An eighth aspect of the present invention is directed towards a television antenna unit including the features of the seventh aspect, wherein said capacitive element is an adjustable capacitor.

A ninth aspect of the present invention is directed towards a television antenna unit including the features of the seventh aspect, wherein said capacitive element is a diode.

A tenth aspect of the present invention is directed towards a television antenna unit including the features of the first aspect, wherein said antenna element is an Inverted F-antenna.

Another object of the present invention is to provide a portable communication device including a television antenna unit that is small while at the same allowing good properties over the whole television transmission band.

According to an eleventh aspect of the present invention this object is achieved by a portable communication device comprising:
a television antenna unit having:
   an antenna element provided with a ground connection and a feeding connection, and
a tuning element providing an adjustable capacitance for tuning said antenna element to a television frequency.

A twelfth aspect of the present invention is directed towards a portable communication device including the features of the eleventh aspect, wherein said antenna element has a long main body, where said ground and feeding connections are provided at a first end of said long main body and the tuning element is connected at a second opposite end of said main body.

A thirteenth aspect of the present invention is directed towards a portable communication device including the features of the eleventh aspect, wherein the feeding connection is distanced from the tuning element with a distance at least approximately corresponding to a quarter of a wavelength of a frequency of the television frequency band.

A fourteenth aspect of the present invention is directed towards a portable communication device including the features of the thirteenth aspect, wherein said frequency is the highest frequency of the television frequency band.

A fifteenth aspect of the present invention is directed towards a portable communication device including the features of the eleventh aspect, wherein said tuning element is a capacitive element in the antenna unit.

A sixteenth aspect of the present invention is directed towards a portable communication device including the features of the fifteenth aspect, wherein said capacitive element is an adjustable capacitor.

A seventeenth aspect of the present invention is directed towards a portable communication device including the features of the fifteenth aspect, wherein said capacitive element is a diode.

An eighteenth aspect of the present invention is directed towards a portable communication device including the features of the eleventh aspect, wherein said tuning element is a matching network inside the portable communication device.

A nineteenth aspect of the present invention is directed towards a portable communication device including the features of the eleventh aspect, wherein said antenna element is an Inverted F-antenna.

A twentieth aspect of the present invention is directed towards a portable communication device including the features of the eleventh aspect, wherein said antenna unit is removable.

A twenty-first aspect of the present invention is directed towards a portable communication device including the features of the eleventh aspect, wherein the portable communication device comprises a user input unit and a control unit arranged to adjust said tuning element based on user inputs via said user input unit.

A twenty-second aspect of the present invention is directed towards a portable communication device including the features of the eleventh aspect, further comprising a telephone antenna.

A twenty-third aspect of the present invention is directed towards a portable communication device including the features of the eleventh aspect, wherein it is a mobile phone.

With the present invention a small television antenna is provided in a simple manner while still allowing good coverage of a television transmission band. The antenna can furthermore be embedded in a module or the phone itself and therefore have no protruding parts. Its tuning is also possible to control adaptively.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 schematically shows a view of the front side of a stick-type phone according to the present invention on which is provided a television antenna unit,
fig. 2 schematically shows a side view of the interior of the phone in fig. 1,
fig. 3 schematically shows the interior of the television antenna unit according to a first embodiment of the present invention connected to a circuit board of the phone in fig. 1,
fig. 4 schematically shows the interior of the television antenna unit according to a second embodiment of the present invention connected to a circuit board of the phone in fig. 1, and
fig. 5 shows a schematic view of units in the phone for adjusting the frequency of the antenna.

### DETAILED DESCRIPTION OF EMBODIMENTS

A portable communication device according to the invention will now be described in relation to a mobile phone, which is a preferred variation of the invention. The phone is furthermore preferably a so-called stick type phone, i.e. a phone having only one body or casing containing all the components of the phone. The portable communication device can be another type of device though, like a cordless phone, a communication module, a PDA or any other type of portable device communicating with radio waves, like a small television set.

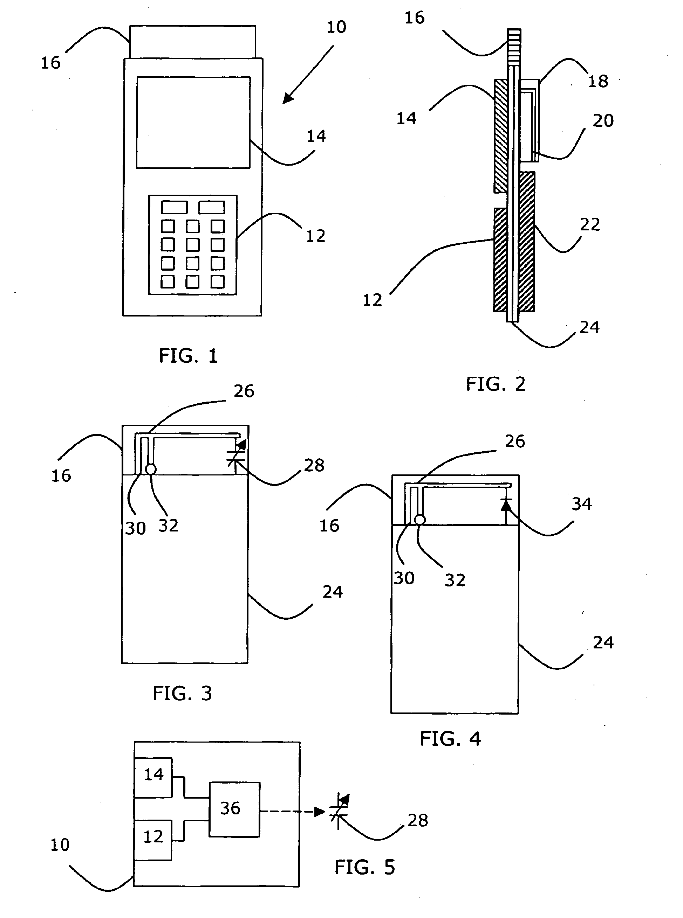

Fig. 1 schematically shows a view of the front side of a phone according to the invention. The phone 10 includes a display 14 and user input unit in the form of a keypad 12, and a television antenna unit in the form of a module 16 plugged in at the top end of the phone. The keypad 12 and the display 14 are provided in openings of the casing of the phone 10. The phone also includes a telephone antenna (not shown). The keypad 12 is arranged for allowing a user of the phone to input information like phone numbers or select various functions. The display 14 is arranged for displaying various type of information to the user of the phone. The display could for instance be provided for displaying television programs received via the antenna module 16 or allowing settings in relation to the antenna module 16.

Fig. 2 illustrates a cross-sectional side view of the major parts of the phone inside the casing, showing a circuit board 24, on a front side of which are provided the display 14 and the keypad 12 and on the back side of which are provided a battery 22 and a phone antenna 18. The phone antenna 18 includes an antenna element 20, which is preferably a PIFA (planar Inverted-F antenna) antenna element connected to ground provided by the circuit board 24 and to a radio circuit (not shown) also provided on the circuit board. On the topside of the board 24 the television antenna module 16 is provided.

The interior of the television antenna module 16 according to a first embodiment of the invention and its connection to the circuit board 24 is schematically shown in fig. 3. Here the circuit board 24 provides a ground plane also for this television antenna module 16. On the circuit board there is also provided a television receiving circuit (not shown) for receiving and processing television signals. The television antenna module 16, which is in the form of a plug-in module, comprises an antenna element 26, which in the preferred embodiment is an IFA (Inverted-F antenna) having a long main body. At one end of the long main body there are provided two legs, where a first of the legs is provided with a connection 30 for connecting to ground of the board 24 and a second feeding leg is provided with a connection 32 to the television receiving circuit. This connection 32 is preferably provided via coaxial cable in order to clearly separate the antenna signal from ground, which is indicated by a circle in the figure. At a second opposite end of the main body, there is provided a tuning element, which tuning element is a passive capacitive element in the form of a tuneable capacitor 28 connected between the main body of the antenna element 26 and ground provided by the circuit board 24. The distance between the feeding leg and the capacitor 28 is preferably about a quarter of a wavelength of the highest frequency of the television frequency band. The total length of the long main body is here within the interval of 40 - 50 mm. The height of the antenna unit is in the interval of 20 - 30 mm. These dimensions guarantee the small size of the antenna module 16.

The long main body of the antenna element can have a variety of different shapes. It can for example have a meandering shape or a spiral shape. The distance between the first grounding leg of the antenna and the second leg can be varied. In order to have a small sized component, they are preferably provided close to each other. The first leg can furthermore include a loading element, like for instance an inductor. The antenna element may furthermore be printed or etched onto a substrate, such that the different parts of the antenna element are provided as electrically conducting traces on the substrate. The substrate may furthermore be provided on a thin plastic supporting film. The capacitor may be a continuous chargeable capacitor, a switchable capacitor or a voltage control tuneable capacitor.

The tuneable capacitor 28 can be used to tune the antenna 26 to different frequencies of the television frequency band, which is normally in the range of 470 - 860 MHz. In this way a small television antenna can be provided, which can easily be included in or provided as a plug-in accessory to a mobile phone. The antenna unit 16 would therefore have at least three electrical interfaces for connection to the phone 10. One for connection to the television receiving circuit, one for tuning the capacitor 28 and one or two for connecting the antenna element 26 and the capacitor 28 to ground.

It should be realised that the tuneable capacitive element need not be a capacitor, but can be provided as other elements providing a capacitance that can be tuned. One such example is shown in fig. 4, which depicts a second embodiment of the present invention, where a diode 34, preferably a PIN diode, has the same position as the previously described capacitor and blocks current running from the antenna element 26 towards ground. The adjusting of the capacitance is in this case provided through varying the voltage over the diode 34.

With the described solution a plug-in module is provided, that can provide reception of television signals while limiting the enlarging the total size of the phone. The television antenna is small and provided in a simple manner while still allowing good coverage of the television transmission band. The antenna is furthermore embedded and therefore has no protruding parts. Its tuning is furthermore possible to control adaptively. It is also possible to remove the antenna module and connect a full size television antenna to the phone. This could for example be the case if the antenna is to be placed in a car, in which case such an antenna can be connected using a hands-free set of the car in question. The module could furthermore include an additional screen and television receiving and modulation circuits in order to provide a plug-in TV set.

The antenna need furthermore not be an IFA antenna, but can just as well be a monopole antenna, in which the tuning element is not a capacitive element. Then this tuning element is provided by a suitable active matching network, for instance provided inside the phone. In the previous drawings the antenna module was provided at the topside of the phone. It does not have to be placed there, it can just as well be provided on any of the other sides of the phone. One such placing is at the bottom side of the phone and being plugged into the system connector. The television antenna need of course not be a plug-in module. It can also just as well be provided as a part of the phone.

In order to tune the antenna, it is possible to provide suitable functionality for this inside the phone. One example of this is now given with reference being made to fig. 5, which shows a block schematic of suitable units inside the phone 10. The phone 10 includes a control unit 36 connected to the keypad 12 and to the display 14 and controlling the tuning of the capacitor 28 of the first embodiment of the invention, which control is indicated by a dashed arrow. In tuning the antenna, a user of the phone can be allowed to select a scanning of the television band, where tuning settings corresponding to television stations can be stored in the control unit 36 through selections by the user. It is furthermore possible that the user can be allowed to manually adjust the tuning of the capacitor by incremental tuning steps and then to store the settings he/she finds best. The stored settings can then be associated with corresponding television stations, such that the user when selecting to view the programs of a selected television station automatically gets the antenna to tune to the frequency of the station. The selections that are possible to make would then be presented to the user via the display and the actual selection be made or confirmed via the keypad. Naturally this tuning control arrangement can also be combined with any of the previously mentioned tuning element variations.

There are a number of variations that can be made to the present invention apart from the ones already mentioned. Other types of phones can be used, like for instance a clamshell phone. Therefore the invention is only to be limited by the following claims.

## Claims

1. Inverted F television antenna unit (16) for a portable communication device (10) comprising:
an antenna element (26) having a long main body and provided with a ground connection (30) in the form of a first leg and a feeding connection (32) in the form of a second leg at a first end of said long main body, and
a tuning element (28; 34) connected between the antenna element and ground at a second opposite end of the long main body and providing an adjustable capacitance,
**characterised in that** the tuning element is provided for tuning the antenna element to different frequencies of a television frequency band of 470 - 860 MHz and the feeding connection is distanced from the tuning element with a distance at least approximately corresponding to a quarter of a wavelength of the highest frequency of this television frequency band and the Inverted F television antenna unit is a removable plug-in module comprising at least three electrical interfaces, being the ground connection (30) of the antenna element and the tuning element, the feeding connection (32) to a television receiving circuit, and the connection
connecting the tuning element; for connection to the communication device (10).

2. Antenna unit according to claim 1, wherein the length of the long main body is in the interval 40 - 50 mm.

3. Antenna unit according to any previous claim, wherein the antenna unit has a height in the interval of 20 - 30 mm.

4. Antenna unit according to any previous claim, wherein said tuning element is a capacitive element.

5. Antenna unit according to claim 4, wherein said capacitive element is an adjustable capacitor (28).

6. Antenna unit according to claim 4, wherein said capacitive element is a diode (34).

7. Mobile Phone (10) comprising a removable television antenna unit (16) according to any of claims 1 - 6.

8. Mobile Phone according to claim 7, wherein said tuning element is a capacitive element in the antenna unit.

9. Mobile Phone according to claim 8, wherein said capacitive element is an adjustable capacitor (28).

10. Mobile Phone according to claims 8, wherein said capacitive element is a diode (34).

11. Mobile Phone according to claim 7, wherein said tuning element is a matching network inside the portable communication device.

12. Mobile Phone according to any of claims 7 - 11, wherein the portable communication device comprises a user input unit (12) and a control unit (36) arranged to adjust said tuning element based on user inputs via said user input unit.

13. Mobile Phone according to any of claims 7 - 12, further comprising a telephone antenna (20).

## Patentansprüche

1. Inverted-F-Fernsehantenneneinheit (16) für ein tragbares Kommunikationsgerät (10), welche aufweist:
ein Antennenelement (26) mit einem langen Hauptteil und einer Masseverbindung (30) in Form eines ersten Schenkels und einer Speiseverbindung (32) in Form eines zweiten Schenkels an einem ersten Ende des langen Hauptteils, und
ein Abstimmelement (28; 34), welches an einem gegenüberliegenden Ende des langen Hauptteils mit Antennenelement und Masse verbunden ist und eine einstellbare Kapazität bereitstellt,
**dadurch gekennzeichnet, dass** das Abstimmelement zur Abstimmung des Antennenelements auf untersclliedliche Frequenzen eines Fernseh-Frequenzbands von 470 - 860 MHz dient und die Speiseverbindung vom Abstimmelement in einem Abstand von etwa mindestens einem Viertel einer Wellenlänge der obersten Frequenz dieses Fernseh-Frequenzbands angeordnet ist und die Inverted-F-Fernsehantenneneinheit ein herausnehmbares Steckmodul ist, welches mindestens drei elektrische Schnittstelle aufweist: die Masseverbindung (30) von Antennenelement und Abstimmelement, die Speiseverbindung (32) zu einer Fernseh-Empfangsschaltung und die Verbindung des Abstimmelements mit dem Kommunikationsgerät (10).

2. Antenneneinheit nach Anspruch 1, wobei die Länge des langen Hauptteils im Bereich zwischen 40 und 50 mm liegt.

3. Antenneneinheit nach einem der vorstehenden Ansprüche, wobei die Höhe der Antenneneinheit im Bereich zwischen 20 und 30 mm liegt.

4. Antenneneinheit nach einem der vorstehenden Ansprüche, wobei das Abstimmelement ein kapazitives Element ist.

5. Antenneneinheit nach Anspruch 4, wobei das kapazitive Element ein einstellbarer Kondensator (28) ist.

6. Antenneneinheit nach Anspruch 4, wobei das kapazitive Element eine Diode (34) ist.

7. Mobiltelefon (10) mit einer herausnehmbaren Fernsehantenneneinheit (16) nach einem der Ansprüche 1 - 6.

8. Mobiltelefon nach Anspruch 7, wobei das Abstimmelement ein kapazitives Element in der Antenneneinheit ist.

9. Mobiltelefon nach Anspruch 8, wobei das kapazitive Element ein einstellbarer Kondensator (28) ist.

10. Mobiltelefon nach Anspruch 8, wobei das kapazitive Element eine Diode (34) ist.

11. Mobiltelefon nach Anspruch 7, wobei das Abstimmelement ein Anpassungsglied innerhalb des tragbaren Kommunikationsgeräts ist.

12. Mobiltelefon nach einem der Ansprüche 7 - 11, wobei das tragbare Kommunikationsgerät eine Nutzer-Eingabeeinheit (12) und eine Steuereinheit (36) aufweist, die das Abstimmelement anhand der Nutzereingaben über die Nutzereingabeeinheit einstellen kann.

13. Mobiltelefon nach einem der Ansprüche 7-12, welches weiterhin eine Telefonantenne aufweist (20).

## Revendications

1. Unité (16) à antenne de télévision quart d'onde court-circuitée pour un dispositif de communication portable (10), comportant :
un élément d'antenne (26) ayant un corps principal long et pourvu d'une connexion de masse (30) sous la forme d'une première branche et d'une connexion d'alimentation (32) sous la forme d'une seconde branche à une première extrémité dudit corps principal long, et
un élément d'accord (28 ; 34) connecté entre l'élément d'antenne et la masse à une seconde extrémité opposée du corps principal long et procurant une capacité ajustable,
**caractérisé en ce que** l'élément d'accord est prévu pour raccorder l'élément d'antenne sur différentes fréquences dans une bande de fréquences de télévision de 470 à 860 MHz et la connexion d'alimentation est éloignée de l'élément d'accord d'une distance correspondant au moins approximativement à un quart d'une longueur d'onde de la fréquence la plus élevée de cette bande de fréquence de télévision et l'unité à antenne de télévision quart d'onde court-circuitée est un module enfichable amovible comportant au moins trois interfaces électriques, qui sont la connexion de masse (30) de l'élément d'antenne et de l'élément d'accord, la connexion d'alimentation (32) sur un circuit de réception de télévision, et la connexion connectant l'élément d'accord pour une connexion au dispositif de communication (10).

2. Unité d'antenne selon la revendication 1, dans laquelle la longueur du corps principal long est dans l'intervalle de 40 à 50 mm.

3. Unité d'antenne selon l'une des revendications précédentes, laquelle unité d'antenne a une hauteur dans l'intervalle de 20 à 30 mm.

4. Unité d'antenne selon l'une quelconque des revendications précédentes, dans laquelle ledit élément d'accord est un élément capacitif.

5. Unité d'antenne selon la revendication 4, dans laquelle ledit élément capacitif est un condensateur ajustable (28) .

6. Unité d'antenne selon la revendication 4, dans laquelle ledit élément capacitif est une diode (84).

7. Téléphone mobile (10) comportant une unité d'antenne de télévision amovible (16) selon l'une quelconque des revendications 1 à 6.

8. Téléphone mobile selon la revendication 7, dans lequel ledit élément d'accord est un élément capacitif dans l'unité d'antenne.

9. Téléphone mobile selon la revendication 8, dans lequel ledit élément capacitif est un condensateur ajustable (28).

10. Téléphone mobile selon la revendication 8, dans lequel ledit élément capacitif est une diode (34).

11. Téléphone mobile selon la revendication 7, dans lequel ledit élément d'accord est un réseau d'adaptation à l'intérieur du dispositif de communication portable.

12. Téléphone mobile selon l'une quelconque des revendications 7 à 11, dans lequel le dispositif de communication portable comporte une unité d'entrée d'utilisateur (12) et une unité de commande (36) agencée pour ajuster ledit élément d'accord sur la base d'entrées d'utilisateur par l'intermédiaire de ladite unité d'entrée d'utilisateur.

13. Téléphone mobile selon l'une quelconque des revendications 7 à 12, comportant en outre une antenne (20) de téléphone.
